Europäisches Patentamt

European Patent Office

Office européen des brevets

(11) Veröffentlichungsnummer: **0 023 977**
**A1**

## (12) EUROPÄISCHE PATENTANMELDUNG

(21) Anmeldenummer: **80104043.7**

(22) Anmeldetag: **12.07.80**

(51) Int. Cl.³: **G 11 B 23/02**

(30) Priorität: **10.08.79 DE 7922878 U**

(43) Veröffentlichungstag der Anmeldung:
**18.02.81 Patentblatt 81/7**

(84) Benannte Vertragsstaaten:
**AT BE CH IT LI NL SE**

(71) Anmelder: **Wittner Rudolf Gmbh u. Co.**
**Bühlbergstrasse 6**
**D-7972 Isny(DE)**

(72) Erfinder: **Härle, Fritz**
**Neutrauchburg**
**F-7972 Isny(FR)**

(74) Vertreter: **Hoeger, Stellrecht & Partner**
**Uhlandstrasse 14c**
**D-7000 Stuttgart 1(DE)**

(54) **Vorrichtung zum Aufbewahren von Gegenständen, insbesondere Kassetten, mit einem bandförmigen Aufzeichnungsträger.**

(57) Die Vorrichtung bildet einen länglichen, durch einen Deckel (12) verschließbaren Behälter (10). Auf dem Behälterboden (14) sind Querwände (16) angeordnet, die Aufnahmefächer (34) zum Einstellen von Video-Kassetten (22) bilden. Innerhalb der Aufnahmefächer befinden sich drei Bodenteilflächen (28, 30, 32), von denen die mittlere Teilfläche (30) horizontal ist. Von dieser erstrecken sich die beiden anderen Teilflächen (28,32) schräg nach außen und unten und bilden Kippkanten (24, 26).

Zur Entnahme einer Kassette (22) ist diese um eine der beiden Kippkanten (24, 26) abzukippen, wobei sie sich in eine zum Ergreifen günstige Lage schrägstellt.

Fig. 1

Anm.: Firma Rudolf Wittner GmbH. u. (
Bühlbergstr. 6
7972 Isny


B e s c h r e i b u n g :

Vorrichtung zum Aufbewahren von Gegenständen,
insbesondere Kassetten mit einem bandförmigen
Aufzeichnungsträger


Die Erfindung betrifft eine Vorrichtung zum Aufbewahren von im
wesentlichen rechteckförmigen Gegenständen, insbesondere Kassetten mit einem bandförmigen Aufzeichnungsträger, mit einer
Vielzahl von durch mindestens zwei Seitenwände und einen Boden
begrenzten Aufnahmefächern für die Gegenstände.

Zum griffbereiten Aufbewahren von Magnetbandkassetten sind
Vorrichtungen bekannt, deren Aufnahmefächer lediglich zwei Seitenwände, eine Rückwand und einen Boden aufweisen (vgl. DE-GM
75 2562 6; CH-PS 5 82 935).

Diese Vorrichtungen sind im Querschnitt winkelförmig ausgebildet und die Kassetten sind hochkant in die Aufnahmefächer hineinzustellen.

In eingestelltem Zustand der Kassetten in die Aufnahmefächer
fluchten die Kassetten-Eckkanten zueinander, so daß diese
zu ihrer Entnahme an ihren hochstehenden Längsseiten ergriffen
und aus den Aufnahmefächern heruasgezogen werden müssen. Diese
Vorrichtungen sind nicht als verschließbare Konstruktionauszubilde Es ist außerdem eine Vorrichtung bekannt, bei der sich die
Aufnahmefächer innerhalb eines Aufnahmegehäuses befinden.
Jedes Aufnahmefach enthält einen Schieber zur Aufnahme einer
Kassette, der in eingeschobenem Zustand zugleich das betreffende Aufnahmefach verschließt. (DE-OS 25 56 609).

Zur Kassettenentnahme sind die Schieber im Gehäuse zu entriegeln,
wonach sie durch eine Druckfeder selbsttätig aus dem
Aufnahmefach herausgeschoben werden. Je Aufnahmefach ist
also eine Entriegelungsvorrichtung vorgesehen, wobei jeweils
nur eine Kassette zur gleichen Zeit in das Aufnahmegehäuse
eingebracht bzw. aus dieser entnommen werden kann.

Die der Erfindung zugrunde liegende Aufgabe besteht nun darin,
eine Vorrichtung zur Aufbewahrung von rechteckförmigen Gegenständen, insbesondere Kassetten mit einem bandförmigen Aufzeichnungsträger, zu schaffen, deren Konstruktionsprinzip ein
Überführen von gespeicherten Gegenständen in eine Stellung
ermöglicht, die eine vorteilhafte Entnahme derselben aus der
Vorrichtung erlaubt, und zwar sowohl dann, wenn die Vorrichtung mit
neben-einanderliegenden frei zugänglichen Aufnahmefächern als auch
mit in einem gegebenenfalls verschließbaren Gehäuse untergebrachten
Aufnahmefächern ausgestattet ist.

Diese Aufgabe wird erfindungsgemäß dadurch gelöst, daß der
Boden der Aufnahmefächer mindestens eine sich quer zu dessen
Längsrichtung erstreckende Kante zum Abkippen der in die Aufnahmefächer eingebrachten Gegenstände aufweist.

Die Anordnung einer Kippkante am Boden der Aufnahmefächer
ermöglicht ein Abkippen gespeicherter Gegenstände in den Aufnahmefächern, so daß sie sich relativ zu den benachbarten
Gegenständen schräg stellen, bzw. derart verlagern lassen,
daß zwei Eckstücke derselben aus der in der Vorrichtung die
gleiche Lage einnehmenden Gruppe von Gegenständen austauchen
und ergriffen werden können.

A 43 682 b — 3 —
y - 179
25. Juli 1979

Diese Möglichkeit des Schrägstellens der Gegenstände erlaubt insbesondere Personen, die lediglich noch über eine Hand verfügen, eine vorteilhafte Entnahme.

Es ist klar, daß dieses Konstruktionsprinzip ebenso vorteilhaft auch bei Vorrichtungen anwendbar ist, die zur Aufnahme lediglich einer Kassette konzipiert sind.

Solche Vorrichtungen weisen üblicherweise ein die Kassette aufnehmendes Gehäuse auf und in diesem ist eine spezielle, technisch aufwendige Vorrichtung vorgesehen, mit deren Hilfe die Kassette entweder bei Öffnen oder nach dem Öffnen des Gehäuses aus diesem herausbewegt wird (vgl. DE-OS 24 27 103; DE-AS 24 27 108; DD-PS 12 31 41; AT-PS 336 300; CH-PS 608 907).

Günstig ist es, wenn der Abstand der Kippkante vom einen Stirnende des Bodens der Aufnahmefächer ungefähr einem Drittel der Gesamtlänge der auf dem Boden zur Auflage kommenden Seite des Gegenstandes entspricht. Dadurch ist eine stabile Auflage von Gegenständen in den Aufnahmefächern gewährleistet.

Bei einer bevorzugten Konstruktion weist der Boden der Aufnahmefächer zwei Kippkanten auf, die ungefähr in gleichem Abstand von dessen Längsmitte vorgesehen sind, so daß sich die Gegenstände in zwei entgegengesetzten Richtungen schrägstellen lassen.

Die Kippkante bzw. -kanten können durch entsprechende, auf dem Boden der Aufnahmefächer vorgesehene Querstege gebildet sein. Wesentlich vorteilhafter ist es jedoch, den Boden der Aufnahmefächer zur Bildung der Kippkanten in Teilflächen aufzugliedern, die einander in stumpfem Winkel zugeordnet sind.

Sofern hierbei die Gegenstände lediglich in einer Richtung abkippbar sein sollen, genügt es, wenn der Boden der Aufnahmefächer zur Bildung der Kippkante zwei einander in stumpfem Winkel
zugeordnete Teilflächen aufweist, wobei sich eine vorteilhafte
Konstruktion ergibt, wenn beide Teilflächen im spitzen Winkel
zur Horizontalen vorgesehen sind. In diesem Falle ruhen die
Gegenstände in einer bestimmten Schräglage in den Aufnahmefächern.
Sofern die Gegenstände in den Aufnahmefächern in zwei Richtungen
abkippbar sein sollen, ist es günstig, die beiden Kippkanten
des Bodens der Aufnahmefächer durch insgesamt drei Bodenteilflächen zu bilden, von denen die mittlere Bodenteilfläche im
wesentlichen horizontal ist.

Bei einer bevorzugten Ausführungsform der Erfindung sind die
Aufnahmefächer innerhalb eines napfartigen Behälters vorgesehen,
dessen Umfangswand mindestens über einen Teil ihrer Höhe von
unten schräg nach außen und oben gerichtet ist, wodurch ein
Freiheitsgrad für das Schrägstellen der Gegenstände im Behälter
geschaffen ist.

Diese Konstruktion ermöglicht es, die Vorrichtung auch verschließbar auszubilden, indem der Behälter mit einem Deckel
ausgestattet werden kann. Behälter und Deckel können vorteilhaft als
aus Kunststoff bestehende Formteile in einem Arbeitsgang hergestellt werden.

Weitere Merkmale und Einzelheiten der Erfindung sind in der
sich anschließenden Beschreibung eines in der Zeichnung dargestellten Ausführungsbeispieles einer erfindungsgemäßen
Vorrichtung und/oder in den Schutzansprüchen erläutert.
In der Zeichnung zeigen:

Fig. 1          einen Querschnitt durch die einen Verschlußdeckel
                aufweisende Vorrichtung

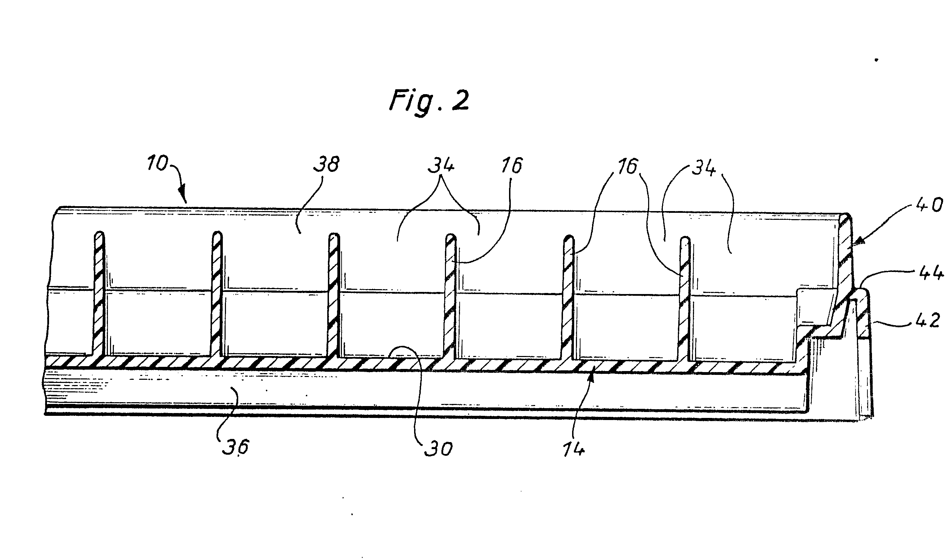

Fig. 2          einen Teillängsschnitt der Vorrichtung entlang
                der Linie 2-2 der Fig. 1

Die gezeigte Vorrichtung weist einen als Ganzes mit 10
bezeichneten napfartigen Behälter auf, der mittels eines auf
diesen aufsetzbaren abnehmbaren Deckels 12 verschließbar ist.

Der Boden des Behälters ist mit 14 bezeichnet. Auf dem Boden
sind im Parallelabstand voneinander, zusammen mit dem Boden
Aufnahmefächer bildende Trennwände 16 angeordnet. Diese,
Seitenwände der Aufnahmefächer bildenden Trennwände erstrecken
sich symmetrisch zur Quermitte des im Grundriss rechteckförmigen
Behälters 10 und enden in größerem Abstand von dessen Längsseitenwänden 18,20.

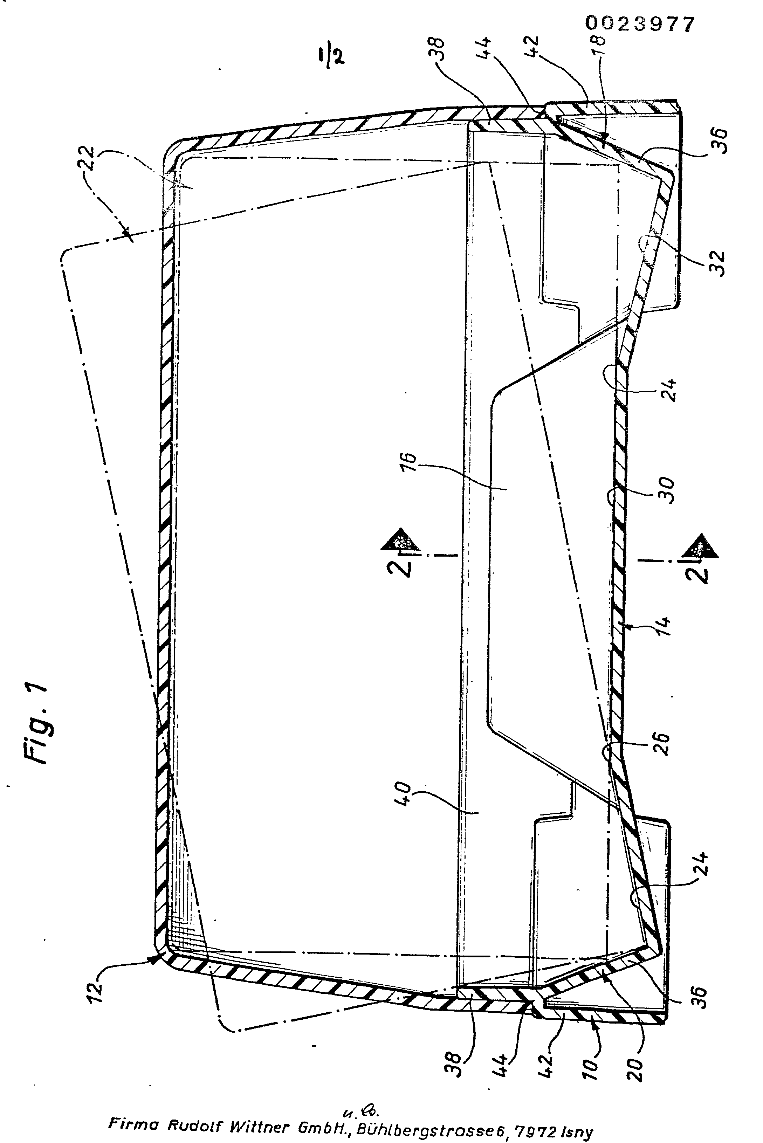

Die Vorrichtung ist beispielsweise zum Aufbewahren von Kassetten
mit einem bandförmigen Aufzeichnungsträger ausgebildet, und es
sei angenommen, daß es sich bei diesen Kassetten um sogenannte
Video-Kassetten zum Aufzeichnen von Televisions-Sendungen handelt. In Fig. 1 ist eine solche in ein Aufnahmefach des Behälters
10 eingestellte Video-Kassette als Ganzes mit 22 bezeichnet.
Der Abstand der Trennwände 16 kann hierbei auch so gewählt sein,
daß sich solche Video-Kassetten samt Etui in den Aufnahmefächern abstellen lassen.

Wie Fig. 1 zeigt, weist der Boden 14 zwei Kippkanten 24,26 auf,
die sich parallel zur Quermitte des Behälters erstrecken. Diese
Kippkanten sind durch insgesamt drei Bodenteilflächen 28,30,32
der mit 34 bezeichneten Aufnahmefächer gebildet. Das mittlere
Bodenteilstück 30 befindet sich hierbei in aufgestelltem Zustand des Behälters in horizontaler Ebene, von der sich die
beiden äußeren Bodenteilflächen 28,32 zur Bildung der Kippkanten
24,26 schräg nach außen und unten erstrecken. Diese Bodenteilflächen der Aufnahmefächer sind ungefähr nur halb so lang wie
die horizontale Bodenteilfläche 30, so daß eine stabile Halterung
der Video-Kassetten 22 in den Aufnahmefächern gewährleistet
ist.

Die die Aufnahmefächer stirnseitig begrenzenden Längsseitenwände 18,20 des Behälters weisen ein unteres Wandteilstück
36 auf, das sich von unten schräg nach oben und außen erstreckt.
An dieses Wandteilstück schließt sich ein vertikales Wandteilstück
38 an. Die durch diese Wandteilstücke gebildeten Längsseitenwände 18,20 bilden Teilstücke einer den Behälter umgebenden
Umfangswand, der damit auch Stirnwände 40 aufweist.

Das vertikale Wandteilstück 38 bildet zusammen mit einem nach
unten gezogenen umlaufenden Schurz 42 am Behälter eine Abstützschulter 44, auf welcher der Deckel 12 abnehmbar aufsitzt.
Demgemäß ragt das einen Kragen bildende vertikale Wandteilstück in den Behälter hinein und fixiert diesen auf dem napfartigen Behälter 10.

Durch die Schräganordnung des Wandteils 36 der Längsseitenwände 18,20 ist im Bereich der Stirnseiten der in die Aufnahmefächer 34 der Vorrichtung eingestellten Video-Kassetten
22 ein Freiheitsgrad geschaffen, der es ermöglicht, zum
Herausnehmen von Video-Kassetten aus den Aufnahmefächern diese
durch Abkippen um eine der beiden Kippkanten 24,26 so schräg
zu stellen, daß sie aus der im napfartigen Behälter 10 gespeicherten Gruppe von Kassetten mit ihren oberen Eckbereichen so austaucht, daß sie vorteilhaft ergriffen werden kann. Durch die
Anordnung der Kippkanten am Boden der Aufnahmefächer 34 konnte
für dieses Schrägstellen der Video-Kassetten auf einen speziellen
Mechanismus zum Bereitstellen der Kassetten in eine Entnahmeposition verzichtet werden. In Fig. 1 ist eine durch Abkippen
in eine der beiden möglichen Entnahmepositionen gebrachte Video-
kassette strichpunktiert angedeutet.

Eine Konstruktionsvariante zu der gezeigten Vorrichtung könnte
auch darin bestehen, am Boden der Aufnahmefächer 36 lediglich
eine Kippkante 24 oder 26 vorzusehen.

A 43 682 b        - 7 -
y - 179
25. Juli 1979

Die Erfindugn ist nicht auf die vorbeschriebene Konstruktionsvariante beschränkt. Sie läßt auch eine Ausbildung der Vorrichtung
zu, bei der diese im Querschnitt in bekannter Weise winkelförmig
gestaltet ist, und bei der die Aufnahmefächer sowohl einen Boden,
als auch eine Rückwand sowie winkelförmig verlaufende Seitenwände aufweist. Grundsätzlich kann die Vorrichtung jede denkbare
Gestaltung haben, weil es gemäß der Erfindung lediglich darauf
ankommt, den Boden der Aufnahmefächer so zu gestalten, daß es
möglich ist, die in die Aufnahmefächer eingestellten Gegenstände
zum Zwecke ihrer Entnahme durch Abkippen schräg stellenzu können.

Anm.: Firma Wittner GmbH u. Co.
Bühlbergstr. 6
7972 Isny

A n s p r ü c h e :

1. Vorrichtung zum Aufbewahren von im wesentlichen rechteckförmigen Gegenständen, insbesondere Kassetten mit einem bandförmigen Aufzeichnungsträger, mit einer Vielzahl von durch
mindestens zwei Seitenwände und einen Boden begrenzten Aufnahmefächern für die Gegenstände, dadurch gekennzeichnet, daß der
Boden der Aufnahmefächer (34 ) mindestens eine sich quer zu
dessen Längsrichtung erstreckende Kante (24 oder 26) zum Abkippen
der in die Aufnahmefächer (34) eingebrachten Gegenstände (22)
aufweist.

2. Vorrichtung nach Anspruch 1, dadurch gekennzeichnet, daß der
Abstand der Kippkante (24 oder 26) vom einen Stirnende des
Bodens der Aufnahmefächer (34)  .   ungefähr einem Drittel der
Gesamtlänge der auf dem Boden zur Auflage kommenden Seite
des Gegenstandes (22) entspricht.

3. Vorrichtung nach Anspruch 1 oder 2, dadurch gekennzeichnet, daß
der Boden der Aufnahmefächer (34) zwei Kippkanten (24,26) aufweist, die ungefähr in gleichem Abstand von dessen Längsmitte
vorgesehen sind.

4. Vorrichtung nach Anspruch 1 oder 2, dadurch gekennzeichnet, daß
der Boden der Aufnahmefächer (34) zur Bildung der Kippkante
(24 oder 26) zwei einander in stumpfem Winkel zugeordnete

- 2 -

Teilflächen   (30,32   oder 28,30) aufweist.

5. Vorrichtung nach Anspruch 4, dadurch gekennzeichnet, daß beide
   Teilflächen des Bodens der Aufnahmefächer im spitzen Winkel zur
   Horizontalen   vorgesehen sind.

6. Vorrichtung nach Anspruch 3, dadurch gekennzeichnet, daß die
   beiden Kippkanten (24,26)  des Bodens der Aufnahmefächer (34)
   durch insgesamt drei Bodenteilflächen (28,30,32) gebildet sind,
   von denen die mittlere Bodenteilfläche (30) im wesentlichen
   horizontal ist.

7. Vorrichtung nach einem der vorhergehenden Ansprüche, dadurch
   gekennzeichnet, daß die Aufnahmefächer (34) innerhalb eines
   napfartigen Behälter (10) vorgesehen sind, dessen Umfangswand
   einen unteren Wandteil (36) aufweist, der von unten schräg
   nach außen und oben gerichtet ist.

8. Vorrichtung nach Anspruch 7, dadurch gekennzeichnet, daß der
   napfartige Behälter (10) mittels eines auf diesem insbesondere
   abnehmbar angeordneten Deckels (12) verschließbar ist.

9. Vorrichtung nach Anspruch 7 oder 8, dadurch gekennzeichnet, daß
   der napfartige Behälter (10) sowie der Deckel (12) durch aus
   Kunststoff bestehende einstückige Formteile gebildet sind.

Fig. 1

Firma Rudolf Wittner GmbH., Bühlbergstrasse 6, 7972 Isny

1/2

A 43 682 b

0023977

Fig. 2

**0023977**

N.mmer der Anmeldung

E: 8. 3 464.

Europäisches Patentamt

# EUROPÄISCHER RECHERCHENBERICHT

| Kategorie | EINSCHLÄGIGE DOKUMENTE | | KLASSIFIKATION DER ANMELDUNG (Int Cl³) |
|---|---|---|---|
| | **EINSCHLÄGIGE DOKUMENTE** | | |
| | Kennzeichnung des Dokuments mit Angabe, soweit erforderlich, der maßgeblichen Teile | betrifft Anspruch | G 1 23/02 |
| | US - A - 3 743 081 (ROBERG) <br> * Spalte 2, Zeile 38 bis Spalte 3, Zeile 7; Figuren * <br> -- | 1,2,9 | |
| | FR - A - 2 274 109 (I.D.N.) <br> * Seite 6, Zeile 31 bis Seite 8, Zeile 6; Figuren 12-14 * <br> -- | 1 | |
| | FR - A - 2 010 916 (STEMBEL) <br> * Seite 2, Zeile 8 bis Seite 3, Zeile 31; Figuren 1-7 * <br> -- | 1-3,9 | **RECHERCHIERTE SACHGEBIETE (Int Cl³)** <br><br> G 11 B 23/02 |
| | DE - A - 2 507 620 (WITTNER) <br> * Seiten 4-6; Figuren * <br> -- | 1,7-9 | |
| A <br> D | FR - A - 2 274 106 (I.D.N.) <br> & DE - A - 2 427 103 <br> -- | 1 | |
| A | US - A - 3 811 745 (CYLKE) | 1,7 | |
| A | FR - A - 2 412 136 (NOVITA STELLA) <br><br> ---- | 1,7-9 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-11-1980 | DECLAT |

EPA form 1503.1 06.78